# EUROPEAN PATENT SPECIFICATION

(11) **EP 2 657 117 B1**
(45) Date of publication and mention of the grant of the patent: **24.08.2016**
(21) Application number: 12742395.2
(22) Date of filing: 13.01.2012
(51) Int. Cl.: B62J 9/00, B60N 2/44, B65D 63/16

(54) **SEAT BAG MOUNTING STRUCTURE AND CONNECTOR**
MONTAGESTRUKTUR UND VERBINDER FÜR SITZBEUTEL
STRUCTURE DE MONTAGE DE HOUSSE DE SIÈGE ET ÉLÉMENT DE LIAISON

(30) Priority: 03.02.2011 JP 2011022121
(43) Date of publication of application: 30.10.2013
(73) Proprietor: Honda Motor Co., Ltd., Minato-ku Tokyo 107-8556 (JP)
(72) Inventor: TAKEMURA, Hiroo, Niiza-shi Saitama 352-8589 (JP); NAGASAKA, Tatsuhiko, Niiza-shi Saitama 352-8589 (JP); MIFUNE, Yoshinori, Niiza-shi Saitama 352-8589 (JP)
(74) Representative: Weickmann & Weickmann PartmbB
(86) International application number: PCT/JP2012/050538
(87) International publication number: WO 2012/105289

(56) References cited:
- DE-A1- 1 812 916
- FR-A1- 2 679 615
- FR-A1- 2 749 741
- JP-A- 3 279 092
- JP-A- 2002 255 078
- JP-U- 58 157 879
- US-A- 3 858 279
- US-A- 4 580 706

## Description

### Technical Field

The present invention relates, in general, to seat bag mounting structures and connectors and, in particular, to a mounting structure and a connector for mounting a seat bag on a seat of a saddle riding type vehicle.

### Background Art

In a seat bag of this type, one known structure (as disclosed in, for example, JPH03-279092 A includes connecting bands provided at one end of a luggage storing bag to be placed on a seat, said connecting bands being fixed to a vehicular body; other connecting bands disposed on another side of the luggage storing bag, said other connecting bands including locking devices (connectors) detachably locked on the body side, such that the luggage storing bag is fastened onto the seat, using the connecting bands disposed two on each side thereof. The structure further includes loading hooks, disposed on the body side, for fixing the luggage storing bag on the seat. Another known structure (as disclosed in, for example, JPS60-161684 U includes an appropriate number of belts disposed on either lateral side of the bag main unit, the belts including hooks to be locked on lower portions of a seat to thereby fix a bag on the seat.

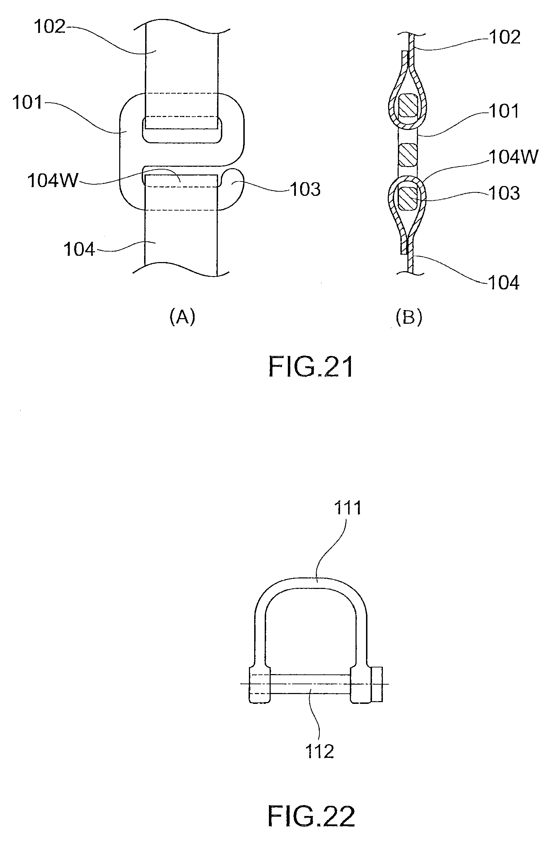

Known connectors include, but are not limited to, following arrangements. Specifically, in one arrangement, referring to Fig. 21, a connector main unit 101 has a first end to which a first side connecting belt 102 is connected. The connector main unit 101 includes a locking rod 103 disposed on a second side thereof, on which a looped portion 104W of a second side connecting belt 104 is latched. Another arrangement includes, as shown in Fig. 22, a substantially U-shaped connector main unit 111 and a bolt 112 threadedly engaged on an end portion of the connector main unit 111. Still another arrangement (as disclosed in, for example, Patent Document 3) includes a connecting belt with a predetermined width and a locking member on which an end portion of the connecting belt folded back upon itself is latched in a condition of being locked against pressure applied in a longitudinal direction of the connecting belt. The locking member is structured to integrate together a longer length holding rod, a shorter length holding rod, a latching rod, an intermediate drawn rod, a shape retaining rod, a rear portion drawn rod, and an auxiliary holding rod. Specifically, the longer length holding rod and the shorter length holding rod have their unique lengths different from each other, extended from a latching hook portion or a fixing body in parallel with each other and spaced apart from each other wider than the width of the connecting belt. The latching rod extends orthogonally from an end portion of the shorter length holding rod and has a length such that a distal end thereof is disposed at a position spaced apart from the longer length holding rod such that the folded back portion of the connecting belt can be inserted in the space. The intermediate drawn rod extends from an end portion of the longer length holding rod in a direction so as to be opposed in parallel with the latching rod. The intermediate drawn rod has a length such that a distal end thereof is disposed at a virtual extension line from the shorter length holding rod. The shape retaining rod extends from a distal end of the intermediate drawn rod along the virtual extension line of the shorter length holding rod. The rear portion drawn rod extends from a distal end of the shape retaining rod in a direction so as to be opposed in parallel with the intermediate drawn rod: The rear portion drawn rod has a length such that a distal end thereof is disposed at a virtual extension line from the longer length holding rod. The auxiliary holding rod extends from a distal end of the rear portion drawn rod toward the longer length holding rod. The auxiliary holding rod has a length such that a distal end thereof is disposed at a position spaced apart from an end portion of the longer length holding rod such that an overlapped portion of the connecting belt can be inserted in the space.

The closest prior art document, FR 2 749 741 A1 discloses a connector buckle for fixing strap of a car child's seat, comprising a connector main unit for connecting a first side connecting component to a first side of the connector main unit in a length direction thereof and a second side connecting belt removably connected to a second side of the connector main unit in the length direction thereof, the second side connecting belt including a loop portion at a distal end thereof, wherein in that the connector main unit includes a second side insertion hole formed on the second side in the length direction thereof for allowing the distal end of the second side connecting belt to be passed therethrough; a first side mounting hole formed on a first side of the second side insertion hole in the length direction thereof; a laterally-extending lock rod disposed at a central side of the first side mounting hole in the length direction thereof, the lock rod having a free lateral end; and a gap provided between the free lateral end and the first side mounting hole, for allowing the loop portion to be put into the gap so as to be locked relative to the lock rod.

FR 2 679 615 A1 discloses a similar connector buckle for adjusting the length of a car seat belt.

US 4 580 706 A discloses a seat bag mounting structure for mounting a seat bag on an occupant seat of a saddle riding type vehicle, comprising a mounting member disposed in a lateral direction on the occupant seat, the mounting member being attached, at right and left ends thereof, to the occupant seat such that the seat bag is mounted on the mounting member; a first side connecting belt connected to a first side of a connector unit in the length direction thereof; and a second side connecting belt removably connected to a second side of the first side connecting belt in the length direction thereof by a buckle.

### Summary of the Invention

### Problems to be Solved by the Invention

In the structure in which a mounting belt connected to a seat bag is to be fixed onto the seat, as in JPH03-279090 A and JPS60-161684 U described above, an elastic seat bag is deformed when the mounting belt is tightened by adjusting a length thereof. As a result, it is difficult to fix the seat bag reliably, so that the seat bag easily tends to be displaced or the belt easily tends to be loose. With a sporty seat having a small shape and a thin cushion, in particular, because of a small amount of deformation of the cushion portion, the seat bag easily tends to be displaced when the belt is loose, which makes it difficult to mount the seat bag securely.

On the other hand, use of the connector facilitates connection between the hook disposed previously on the seat and the seat bag side.

However, in the connector shown in Fig. 21, while the second side connecting belt 104 can be easily latched onto the locking rod 103, the second side connecting belt 104 can be easily disengaged from the locking rod 103. In addition, the locking rod 103 has a cantilever shape with a free distal end, which is disadvantageous in terms of strength. Whereas the connector shown in Fig. 22 can withstand high load, the bolt 112 must be turned and removed when a belt is to be connected, which requires an additional step. Moreover, by vibration or the like, the bolt 112 may become loose or may be lost after removal. With the arrangement disclosed in JPH07-23430 U, the locking member is formed by bending a single rod-like metal bracket, so that the locking member is shaped complicatedly and the latching rod and the rear portion drawn rod have a cantilever shape with a free distal end, which makes the locking member disadvantageous in terms of strength.

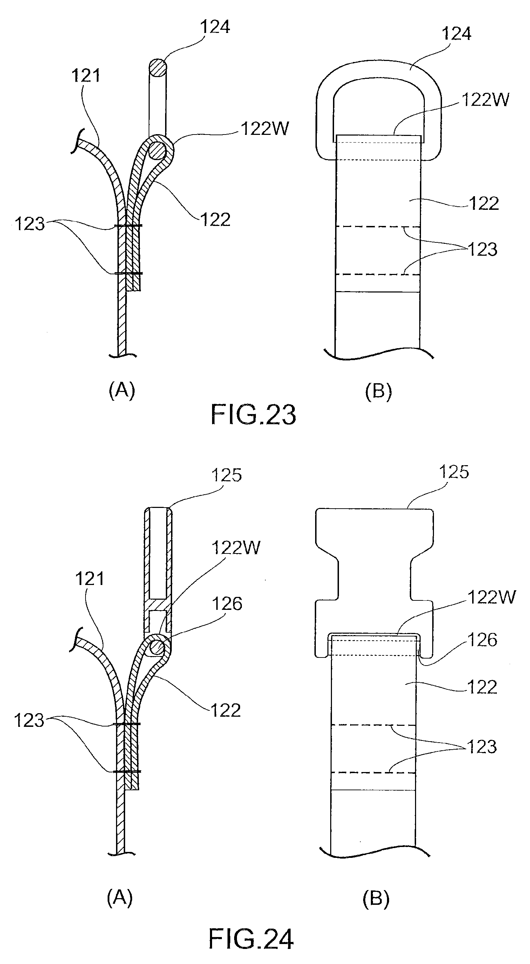

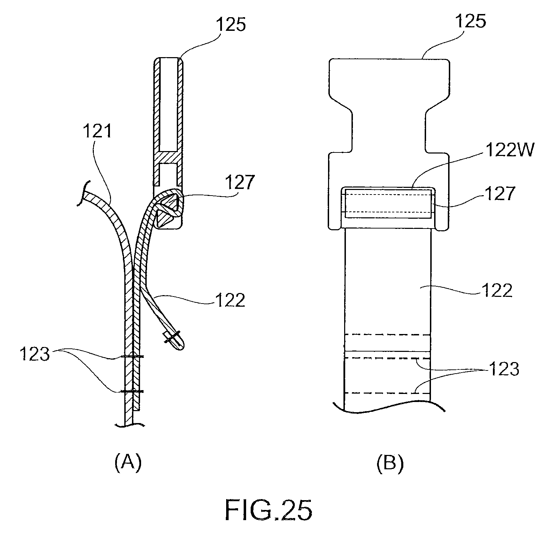

In the meantime, a seat bag and other seat bags have belts removably connected thereto for the purpose of fastening, carrying or the like, and the connecting structures thereof include: one as shown in Fig. 23, in which a doubled connecting belt 122 is sewed on a bag through a sewing portion 123 to thereby form a loop portion 122W at the distal end of the belt 122 and then an approximately D-shaped connector main unit 124 is connected to the loop portion 122W in order for a hook-like metallic member (not shown) or the like to be removably connected to this connector main unit 124; another one as shown in Fig. 24, in which a connecting shaft 126 of a locking member 125 is connected to the loop portion 122W; and yet another one as shown in Fig. 25, in which a proximal end of the connecting belt 122 is sewed on the bag 121 through the sewing portion 123, while a distal end of the connecting belt 122, which is allowed to remain a free end, is wound around a winding rod 127 of the locking member 125 in order for the connecting belt 122 to be connected to the locking member 125 in a manner capable of being adjusted in length. According to the connecting structure shown in Fig. 23, however, since the connecting belt 122 and the connector main unit 124 are attached to the bag 121, the number of components increases, resulting in complicated fabrication processing of the bag 121, and similarly, according to the connecting structure shown in Fig. 24 as well, the connecting belt 122 and the connector main unit 124 are attached to the bag 121, and hence, the number of components increases, resulting in complicated fabrication processing of the bag 121, and further, according to the connecting structures shown in Fig. 23 and 24, component replacement is not available even if the connector main unit 124 and the locking member 125 are broken, thus leading to the problem that the replacement of the both must be done together with the bag body itself. According to the connecting structure shown in Fig. 25, it is likely to cause the connecting belt to loosen and disengage.

The present invention has been made in view of the foregoing problems and it is an object of the present invention to provide a seat bag mounting structure that ensures easy and reliable mounting of a seat bag on a seat, and it is another object of the present invention to provide a connector having a shape to facilitate connection work and to withstand load.

### Means for Solving the Problems

To achieve the foregoing objects, a first aspect of the present invention provides a seat bag mounting structure in accordance with claim 1.

A second aspect of the present invention is characterized in that the mounting member is disposed in a tensioned state.

A third aspect of the present invention is characterized in that the seat bag is removably mounted on the mounting member.

A fourth aspect of the present invention is characterized in that the occupant seat includes a mounting portion disposed at a lower portion thereof and the mounting member is fixed at right and left ends to the mounting portion.

A fifth aspect of the present invention provides a connector for mounting a seat bag on an occupant seat of a saddle riding type vehicle in accordance with claim 5.

The connector includes: a connector main unit for connecting a first side connecting component to a first side of the connector main unit in a length direction thereof; and a second side connecting belt removably connected to a second side of the connector main unit in the length direction thereof, the second side connecting belt including a loop portion at a distal end thereof.

The connector main unit includes: a second side insertion hole formed on the second side in the length direction thereof for allowing the distal end of the second side connecting belt to be passed therethrough;
a first side mounting hole formed on a first side of the second side insertion hole in the length direction thereof;
a laterally-extending lock rod disposed at a central side of the first side mounting hole in the length direction thereof, the lock rod having a free lateral end; and
a gap provided between the free lateral end and the first side mounting hole, for allowing the loop portion to be put into the gap so as to be locked relative to the lock rod.

A sixth aspect of the present invention is characterized in that the connector is used in the seat bag mounting structure for mounting the seat bag on the occupant seat of a saddle riding type vehicle; and the second side connecting belt is disposed on the occupant seat.

An seventh aspect of the present invention is characterized in that a seat bag is provided with the second side connecting belt.

A eighth aspect of the present invention is characterized in that the connector main unit is integrated, at the first side, with a second lock portion removably locked relative to a first lock portion.

### [Effects of the Invention]

In the seat bag mounting structure according to the first aspect of the present invention as defined in claim 1, the mounting member is mounted on the occupant seat and the seat bag is mounted on the mounting member. The mounting member is not therefore loosened, so that the seat bag can be reliably fixed. In addition, during mounting, there is no need to pull the seat bag partly, so that the seat bag can be steadily mounted.

In the seat bag mounting structure according to the aspect of the present invention as defined in the second aspect, the mounting member can be reliably fixed to the occupant seat without allowing the mounting member to be displaced.

In the seat bag mounting structure according to the aspect of the present invention as defined in the third aspect, only the seat bag can be easily removed.

In the seat bag mounting structure according to the aspect of the present invention as defined in the fourth aspect, the mounting member can be mounted on the occupant seat using the mounting portion disposed at the lower portion of the occupant seat.

In the seat bag mounting structure according to the aspect of the present invention as defined in claim 1, the mounting member can be removed when the seat bag is not in use, which ensures appearance design quality of the occupant seat.

In the connector according to another aspect of the present invention as defined in the fifth aspect, the second side connecting belt can be easily connected to the connector main unit. In addition, load applied to the lock rod can be reduced because of the loop portion that is passed through the second side insertion hole and locked relative to the lock rod.

In the connector according to another aspect of the present invention as defined in the sixth aspect, the second side connecting belt disposed on the occupant seat is connected to the connector main unit, to thereby allow the connector main unit to be used for mounting the seat bag.

In the connector according to another aspect of the present invention as defined in the seventh aspect, the second side connecting belt can be easily connected to the connector main unit, and the load applied to the lock rod can be reduced by locking the loop portion, which is passed through into the second insertion hole, to the lock rod. Further, the connector main unit is not fixed to the bag and therefore a buckle can be replaced to meet user friendliness, so that there are no longer any concerns about the connector main unit being disengaged or loosened as was conventionally done so. Furthermore, the second side connecting belt is looped to be mounted on the bag without sewing the connector main unit on the bag and hence the second side connecting belt can be easily mounted on the bag.

In the connector according to another aspect of the present invention as defined in the eighth aspect, locking the first lock portion to the second lock portion connected to the bag enables the first side connecting component to be connected to the bag.

### [Brief Description of the Drawings]

Fig. 1 is a cross-sectional view for illustrating a first embodiment of the present invention.
Fig. 2 is a plan view showing a connector main unit according to the first embodiment of the present invention.
Fig. 3 is a perspective view for illustrating a method for connecting the connector according to the first embodiment of the present invention.
Fig. 4 is a perspective view showing a condition in which the connector according to the first embodiment of the present invention is connected.
[Fig. 5]

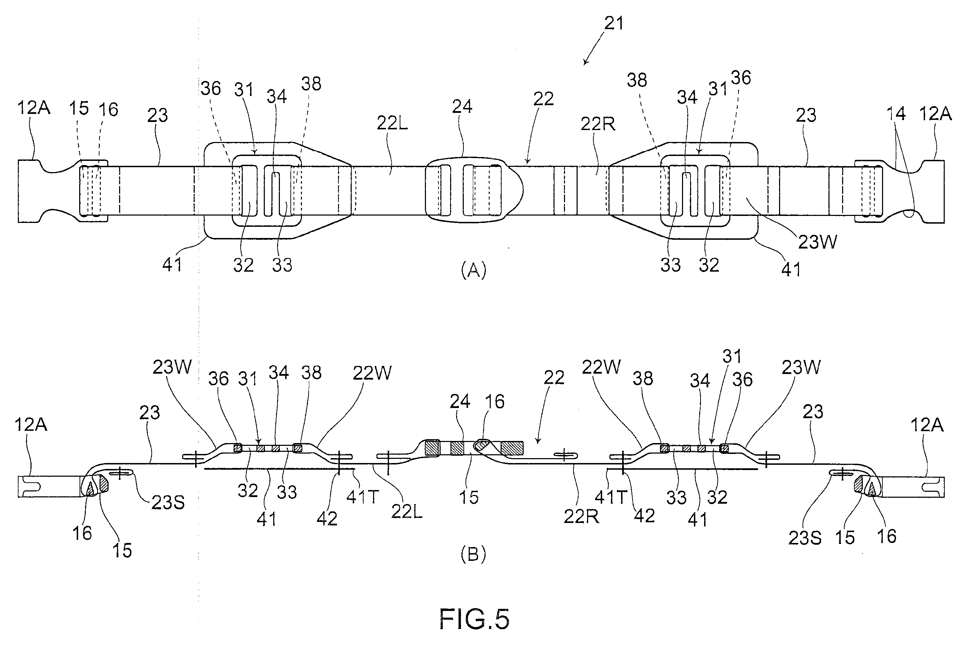

   Fig. 5 is views showing a mounting member according to the first embodiment of the present invention, Fig. 5(A) being a plan view and Fig. 5(B) being a cross-sectional view.
[Fig. 6]

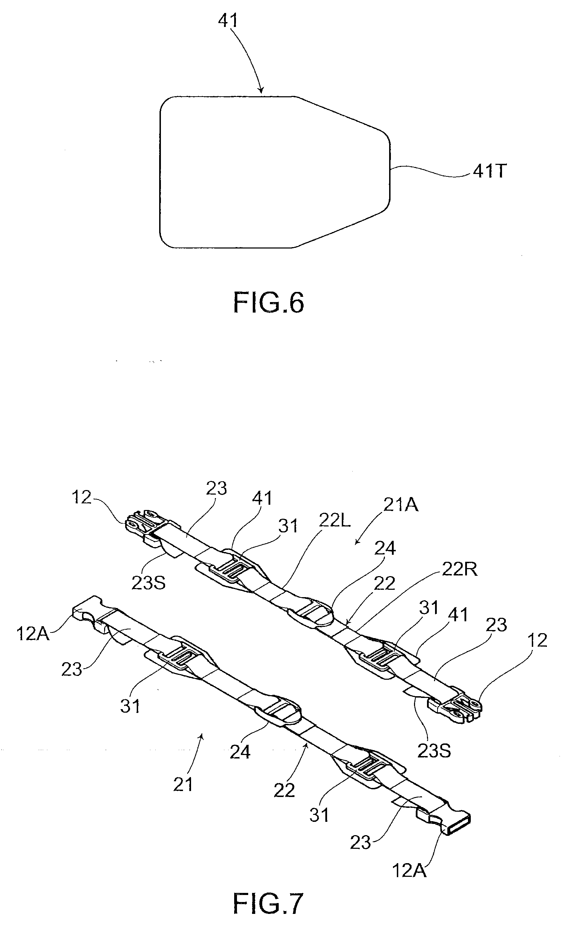

   Fig. 6 is a plan view showing a pad according to the first embodiment of the present invention.
[Fig. 7]
   Fig. 7 is a perspective view showing the mounting member according to the first embodiment of the present invention.
[Fig. 8]

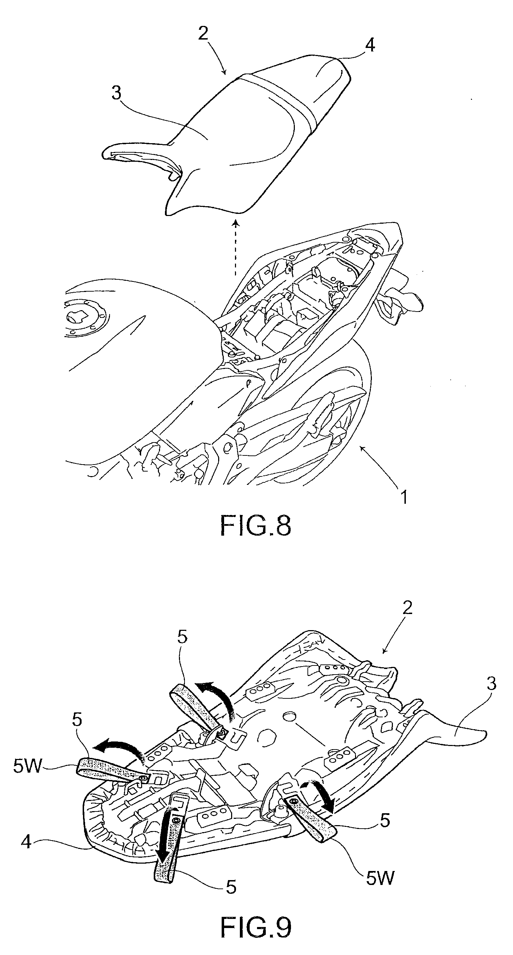

   Fig. 8 is a perspective view showing a vehicle body with a seat removed, according to the first embodiment of the present invention.
[Fig. 9]
   Fig. 9 is a perspective view showing a bottom surface side of the seat according to the first embodiment of the present invention.
[Fig. 10]

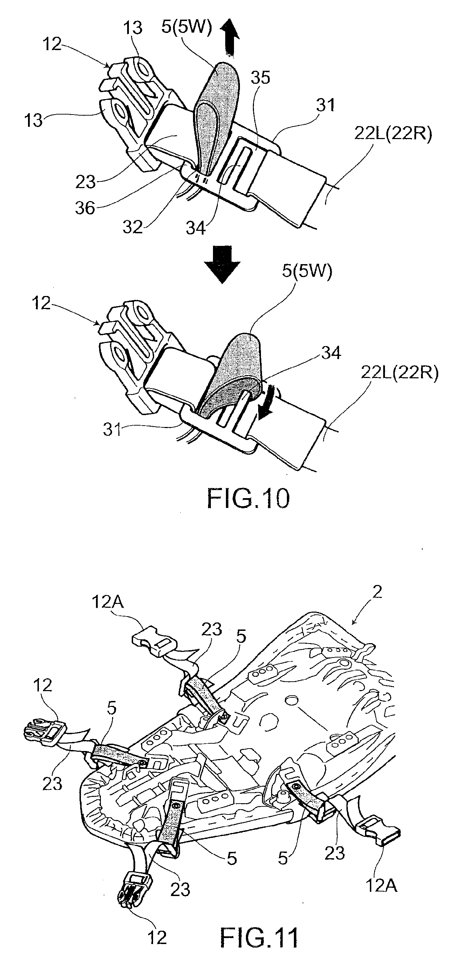

   Fig. 10 is a perspective view for illustrating a method for connecting the connector according to the first embodiment of the present invention.
[Fig. 11]
   Fig. 11 is a perspective view showing the bottom surface side of the seat mounted with the mounting member according to the first embodiment of the present invention.
[Fig. 12]

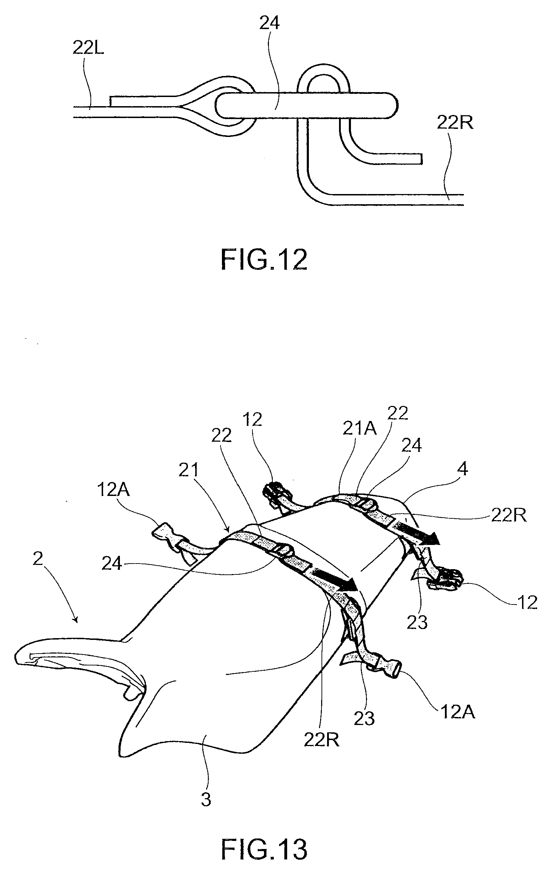

   Fig. 12 is a side elevational view showing a length adjusting device according to the first embodiment of the present invention.
[Fig. 13]
   Fig. 13 is a perspective view for illustrating a method for mounting the mounting member in a tensioned state according to the first embodiment of the present invention.
[Fig. 14]

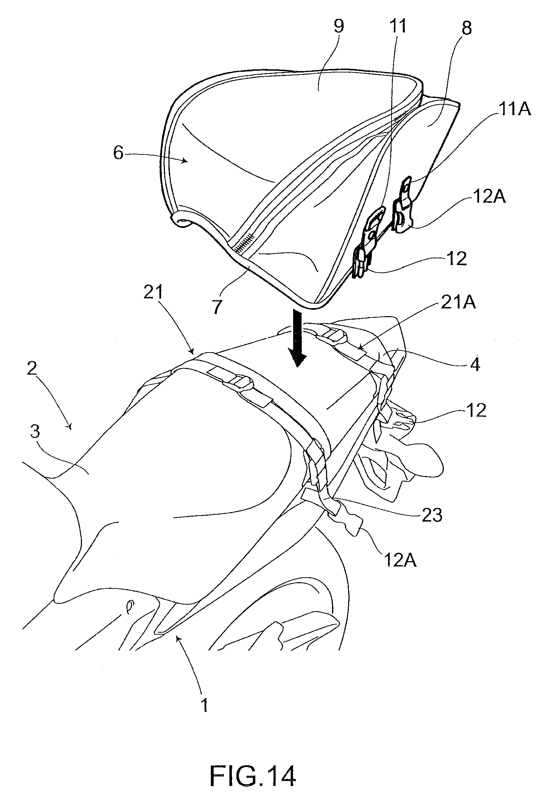

   Fig. 14 is a perspective view for illustrating a method for mounting a seat bag according to the first embodiment of the present invention.
[Fig. 15]

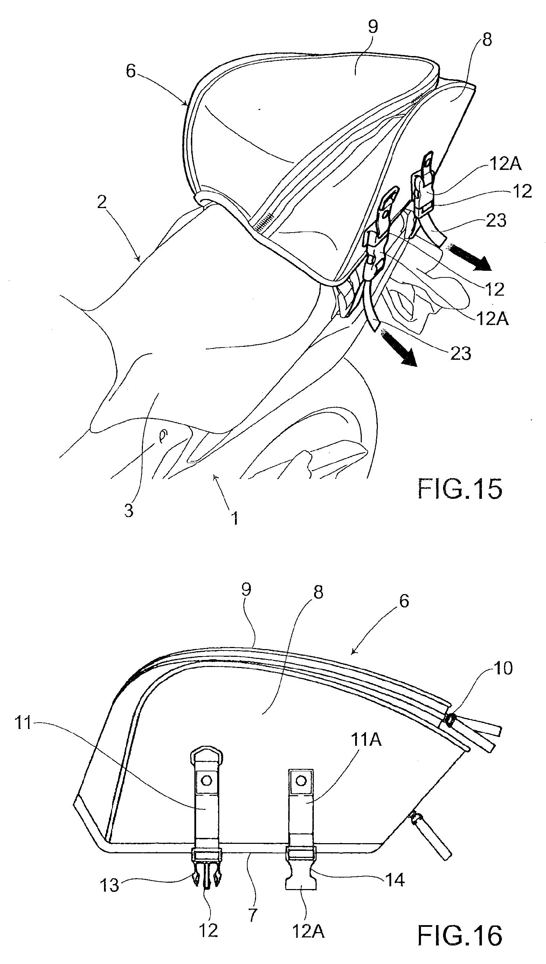

   Fig. 15 is a perspective view for illustrating a condition in which the seat bag is mounted according to the first embodiment of the present invention.
[Fig. 16]
   Fig. 16 is a side elevational view showing the seat bag according to the first embodiment of the present invention.
[Fig. 17]

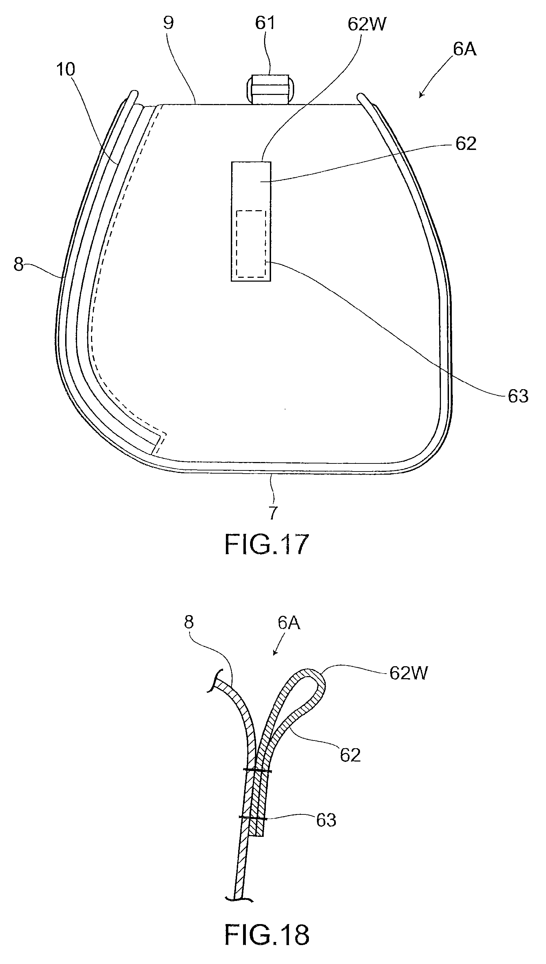

   Fig. 17 is an elevational view of the bag illustrating another aspect.
[Fig. 18]
   Fig. 18 is a cross-sectional view of a main part of the bag illustrating the other aspect.
[Fig. 19]

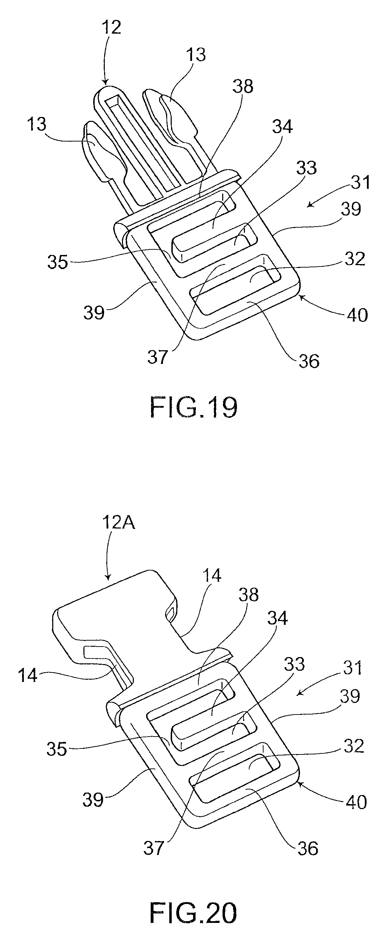

   Fig. 19 is a perspective view of a connector main unit with a male lock portion illustrating the other aspect.
[Fig. 20]
   Fig. 20 is a perspective view of a connector main unit with a female lock portion illustrating the other aspect.
[Fig. 21]
   Fig. 21 is views showing a known connector, Fig. 17(A) being a front elevational view and Fig. 17(B) being a cross-sectional view.
[Fig. 22]
   Fig. 22 is a front elevational view showing a connector according to another known art.
[Fig. 23]
   Fig. 23 shows an approximately D-shaped connecting structure according to one known art, in which Fig. 23(A) and Fig. 23(B) are a cross-sectional view and an elevational view, respectively
[Fig. 24]
   Fig. 24 shows a connecting structure with a lock member according to one known art, in which Fig. 24(A) and Fig. 24(B) are a cross-sectional view and an elevational view, respectively
[Fig. 25]
   Fig. 25 shows a connecting structure which is equipped with a lock member according to yet another known art and is adjustable in belt length, in which Fig. 25(A) and Fig. 25(B) are a cross-sectional view and an elevational view, respectively.

### [Mode for Carrying Out the Invention]

A seat bag mounting structure and a connector according to an embodiment of the present invention will be described below with reference to the accompanying drawings.

### [First Embodiment]

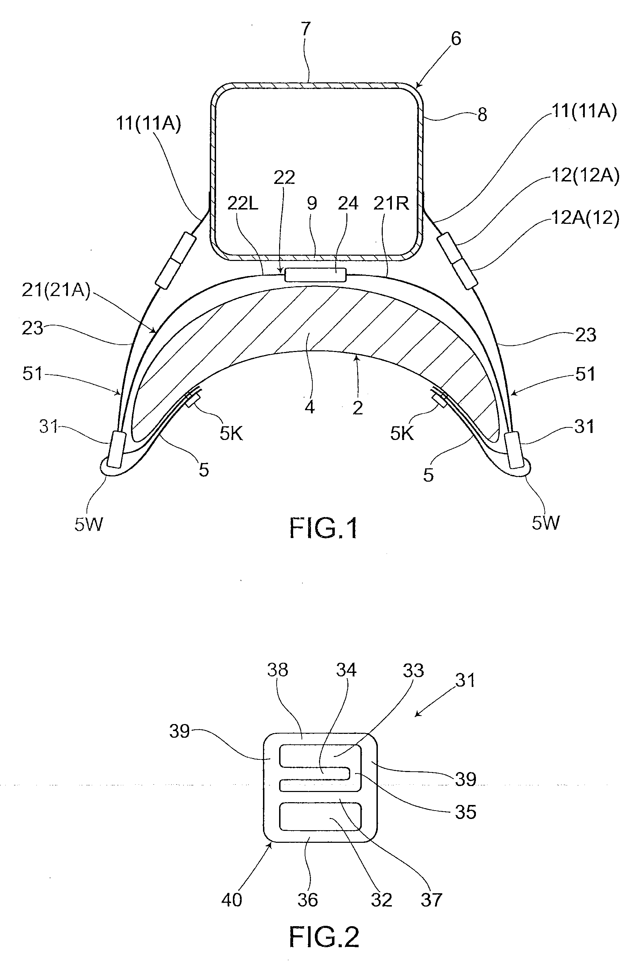

Referring to Figs. 1 to 16, a vehicle body 1 of a saddle riding type vehicle includes an occupant seat 2. The occupant seat 2 includes a rider seat 3 that serves as a seat front portion and a passenger seat 4 that serves as a seat rear portion. The rider seat 3 and the passenger seat 4 are thus arranged in tandem. In addition, the occupant seat 2 is removably mounted on the vehicle body 1 through removing means (not shown). The passenger seat 4 is an occupant seat disposed in rear of the rider seat 3.

Referring to, for example, Fig. 9, the occupant seat 2 includes a seat side mounting belt 5 that is disposed at a lower portion thereof and serves as a mounting portion. The seat side mounting belt 5 is a flexible band formed of a woven synthetic resin material folded into two to form a loop portion 5W on a distal end side thereof. The band has proximal ends overlapping and fixedly attached to a lower surface of the occupant seat 2 using fixing means 5K such as a rivet. The occupant seat 2 includes four seat side mounting belts 5, 5, 5, 5 disposed at right and left, and front and rear sides, of the passenger seat 4.

It is noted that the seat side mounting belts 5 constitute second side connecting belts in a connector to be described later. A flexible band formed of a woven synthetic resin material is used for each belt to be described later, except in portions, for example, metal brackets and hard resin portions.

A seat bag 6 is removably mounted on the passenger seat 4. Referring to Figs. 14 to 16, the seat bag 6 includes a bottom surface portion 7, side surface portions 8 surrounding all sides, and an upper surface portion 9. The upper surface portion 9 has a fastener 10 serving as open/close means that can be used to open the upper portion. The bottom surface portion 7, the side surface portions 8, and the upper surface portion 9 are formed of, for example, a flexible sheet material. In addition, the right and left side surface portions 8 of the seat bag 6 include bag side mounting belts 11, 11, 11A, 11A disposed so as to correspond to the seat side mounting belts 5, 5, 5, 5. Each of the forward right and left bag side mounting belts 11, 11 includes a male lock portion 12 at a distal end thereof. Each of the rearward right and left bag side mounting belts 11A, 11A includes a female lock receiving portion 12A at a distal end thereof. The male lock portion 12 can be resiliently engaged with, or disengaged from, the female lock receiving portion 12A. Inserting the lock portion 12 resiliently into the lock receiving portion 12A causes claw portions 13, 13 on both sides of the lock portion 12 to be locked in, and connected with, the lock receiving portion 12A. Pressing the claw portions 13, 13 from both sides to thereby narrow a gap therebetween allows the lock portion 12 to be disengaged from the lock receiving portion 12A. It is to be noted that the lock receiving portion 12A has opening portions 14, 14 formed on both sides thereof, so that the claw portions 13, 13 can be pressed from the outside.

Referring to, for example, Figs. 5 and 6, The seat bag mounting structure according to the embodiment includes mounting members 21, 21A to be locked relative to both lateral sides of the occupant seat 2. The mounting member 21 is belt-shaped and includes the lock receiving portions 12A on both ends thereof. The mounting member 21 further includes a length adjusting belt 22, end belts 23, 23, and a connector main unit 31. Specifically, the length adjusting belt 22 constitutes a mounting member main unit disposed at the center of the mounting member 21. The end belts 23, 23 are disposed on both sides of the mounting member 21. The connector main unit 31 connects between the length adjusting belt 22 and the end belts 23, 23. It is noted that, as shown in Fig. 7, the mounting member 21A shares the same arrangements with the mounting member 21, except that the lock portions 12, 12 are disposed on both ends thereof.

Referring to Fig. 5, the lock receiving portion 12A has an insertion hole 15 formed at a proximal end thereof. The lock receiving portion 12A further includes a winding rod 16 formed at the center of the insertion hole 15 on a side adjacent a vertically first side (a lower side). The winding rod 16 has a substantially triangular cross section. A distal end of the end belt 23 is then passed through a distal end side of the insertion hole 15 from a vertically second side (an upper side). The distal end of the end belt 23 is then folded back so as to be wound along a lower side of the winding rod 16. The folded back distal end is next passed through the insertion hole 15, from a proximal end side of the insertion hole 15 upwardly. A distal end 23S of the end belt 23 is tightened or loosened to thereby adjust the position at which the end belt 23 is wound around the winding rod 16. This allows a length of the end belt 23 to be adjusted.

Similarly, a distal end of the bag side mounting belt 11 is passed through a distal end side of the insertion hole 15 from a vertically second side (an upper side). The distal end of the bag side mounting belt 11 is then folded back so as to be wound along a lower side of the winding rod 16. The folded back distal end is next passed through the insertion hole 15, from a proximal end side of the insertion hole 15 upwardly. The distal end of the bag side mounting belt 11 is tightened or loosened to thereby adjust the position at which the bag side mounting belt 11 is wound around the winding rod 16. This allows a gap between a proximal end of the bag side mounting belt 11 and the lock receiving portion 12A to be adjusted. Similarly, a proximal end of the lock portion 12 has an insertion hole 15 and a winding rod 16, so that a gap between a proximal end of the bag side mounting belt 11A and the lock portion 12 can be adjusted to thereby allow a length of the bag side mounting belt 11A to be adjusted.

Thus, the lock portion 12 and the lock receiving portion 12A constitute connecting means that can be connected and disconnected. It is noted that a length of the end belt 23 connected to the lock portion 12 can also be adjusted.

A length adjusting device 24 is disposed midway the length adjusting belt 22. A first side belt 22L is connected to a first side (on the left side in Fig. 5) of the length adjusting device 24. The length adjusting device 24 also has an insertion hole 15 and a winding rod 16 formed at a second side thereof (on the right side in Fig. 5). The winding rod 16 is disposed on a side adjacent the vertically second side (the upper side). In the same manner as with the end belt 23, a distal end of a second side belt 22R is passed through the insertion hole 15 so as to be wound along the winding rod 16 and folded back. The distal end of the second side belt 22R is tightened or loosened to thereby adjust the position at which the second side belt 22R is wound around the winding rod 16, which allows a length of the length adjusting belt 22 to be adjusted.

Referring to Fig. 2, the connector main unit 31 is formed of a hard material, such as a metal or a synthetic resin. Shaped substantially into a flat sheet, the connector main unit 31 has a second side insertion hole 32 formed on a second side in a length direction and a first side mounting hole 33 formed on a first side in the length direction. Each of the second side insertion hole 32 and the first side mounting hole 33 has a lateral width slightly wider than a width of the belt. The second side insertion hole 32 is a rectangle having a longer lateral length. A laterally extending lock rod 34 is disposed at a central side in the length direction of the first side mounting hole 33. The lock rod 34 protrudes from a first lateral side and is integrally formed with a frame portion to be described later. The lock rod 34 has a free distal end with a gap 35 provided between the free distal end and the first side mounting hole 33. The connector main unit 31 includes a second side drawn rod 36 extending laterally on the second side thereof. The connector main unit 31 further includes an intermediate drawn rod 37 disposed between the second side insertion hole 32 and the first side mounting hole 33. The connector main unit 31 further includes a first side connecting rod 38 disposed on the first side thereof. The second side drawn rod 36, the first side connecting rod 38, and right and left connecting portions 39, 39 that connect right and left ends of the second side drawn rod 36 and the first side connecting rod 38 constitute a frame portion 40.

Referring to Fig. 5, a loop portion 23W of the end belt 23 is connected to the second side drawn rod 36 of the connector main unit 31 and loop portions 22W of the first side belt 22L and the second side belt 22R are connected to the first side connecting rods 38, 38 of the connector main units 31, 31.

A pad 41 is placed along an inner surface of the connector main unit 31. The pad 41 is formed to be greater than the connector main unit 31 and has a first end side 41T tapered to have a decreasing width toward an end portion that is formed to be substantially identical in width to the first and second side belts 22L, 22R. An end portion of each of the first and second side belts 22L, 22R is inserted in the first side mounting hole 33 and folded back, and the folded back end portion is overlapped with a proximal end side. The distal end and the proximal end side are sewed by a sewing portion 42 to thereby form the loop portion 22W. As described above, each of the loop portions is formed by folding back the belt, and by overlapping the folded back distal end with the proximal end side and sewing the ends together. In addition, the pad 41 is overlapped with an inner surface of each of the first and second side belts 22L, 22R and an end portion of the pad 41 is fixed to the first and second side belts 22L, 22R by the sewing portion 42.

In this example, the connector main unit 31, the first side belt 22L or the second side belt 22R as a first side connecting belt, and the seat side mounting belt 5 as a second side connecting belt constitute a connector 51.

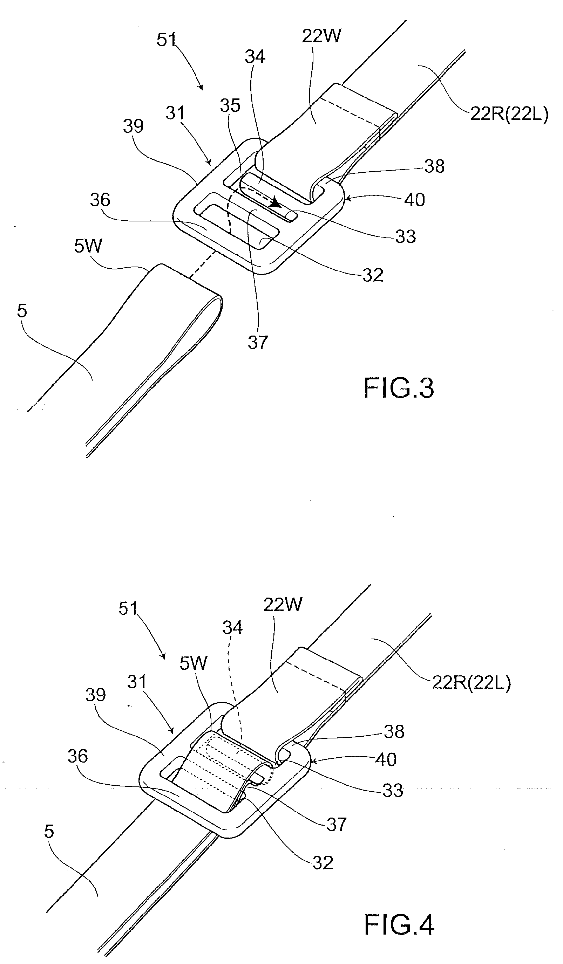

When the seat side mounting belt 5 is to be connected to the connector main unit 31, the following steps are to be followed. Specifically, referring to Figs. 3; 4, and 10, the distal end of the loop portion 5W of the seat side mounting belt 5 is passed through the second side insertion hole 32 from a vertically first side (a lower surface side) of the connector main unit 31; the distal end of the loop portion 5W is trailing over the lock rod 34 by way of the gap 35; with the lock rod 34 inserted in the loop portion 5W, the loop portion 5W is locked relative to the lock rod 34. Through the foregoing steps, a lower surface of the second side drawn rod 36 and an upper surface of the intermediate drawn rod 37 abut on an upper surface and a lower surface, respectively, of the seat side mounting belt 5 at a second side and a first side of the second side insertion hole 32, so that friction occurs between the second side drawn rod 36 and the seat side mounting belt 5, and between the intermediate drawn rod 37 and the seat side mounting belt 5. This allows load applied from the seat side mounting belt 5 to the lock rod 34 to be reduced. It is to be noted that the mounting member 21 is disposed so as to follow along a front side upper surface of the passenger seat 4, while the mounting member 21A is disposed so as to follow along a rear side upper surface of the passenger seat 4.

When the connector main units 31, 31 on both lateral sides of the mounting members 21, 21A are connected to the right and left seat side mounting belts 5, 5 in the foregoing manner, the distal end of the second side belt 22R is pulled to thereby shorten the length adjusting belt 22. The mounting members 21, 21A are thus mounted on the passenger seat 4 with tension applied to the length adjusting belt 22. The length of the first side belt 22L may be adjusted to apply tension in the lock portion 12 and the lock receiving portion 12A. The mounting members 21, 21A can thereby be tightly fixed onto the passenger seat 4 without allowing the length adjusting belt 22 to be loosened or displaced.
In this case, if the length adjusting belt 22 is tightened so as to compress a cushion portion of the passenger seat 4, an even reliable fixing state can be achieved. In addition, the pad 41 is disposed between the connector main unit 31 and an outer surface of the passenger seat 4 in the mounted state, the outer surface of the passenger seat 4 is not damaged by the connector main unit 31 in contact therewith.

Referring to Figs. 14 and 15, the seat bag 6 is placed on the passenger seat 4 and the lock portions 12, 12 and the lock receiving portions 12A, 12A of the bag side mounting belts 11, 11A are connected to the lock receiving portions 12A, 12A and the lock portions 12, 12 of the end belts 23, 23, 23, 23. Then, referring to Fig. 15, the distal end 23S of the end belt 23 is pulled to tighten the end belt 23 and the seat bag 6 is thereby fixed onto the passenger seat 4. The length adjusting belt 22 is not moved even by tightening the end belt 23 in this manner.

In The seat bag mounting structure described above, the length adjusting belt 22 as the mounting member main unit is mounted and fixed on the occupant seat 2 in a tensioned state. Consequently, the seat bag 6 can be reliably mounted on the occupant seat 2 without allowing the seat side mounting belt 5 to be loosened even when the seat bag 6 is mounted on the mounting members 21, 21A or without having to pull partly the seat bag 6. In addition, the length adjusting belt 22 is tensioned with a predetermined tension, the mounting members 21, 21A can be reliably mounted even on a sporty, compact seat offering a low cushioning property. Furthermore, the length of the mounting members 21, 21A is adjustable, so that The seat bag mounting structure is applicable to various types of seats having different shapes. When the occupant seat 2 is to be removed, there is no need to remove the seat bag 6 and the seat bag 6 can be removed with the occupant seat 2 or opened. Additionally, the connector main unit 31 is a flat plate with holes drilled therein and the belt used is universally available, which achieves cost effectiveness and versatility.

It is noted that the loop portion 5W of the seat side mounting belt 5 may be locked directly onto the lock rod 34, instead of passing it through the second side insertion hole 32. In this case, the length of the seat side mounting belt 5 in a connected state is longer than when the seat side mounting belt 5 is passed through the second side insertion hole 32 and can be adjusted.

As described heretofore, in the above-described embodiment and according to claim 1, in the seat bag mounting structure for mounting the
seat bag 6 on the occupant seat 2 of a saddle riding type vehicle, the mounting members 21, 21A are disposed laterally on the occupant seat 2, the right and left connector main units 31, 31 of the mounting members 21, 21A are mounted on the occupant seat 2, and the seat bag 6 is mounted on the mounting members 21, 21A. The mounting members 21, 21A are not therefore loosened, so that the seat bag 6 can be reliably fixed. In addition, during mounting, there is no need to pull the seat bag 6 partly, so that the seat bag 6 can be steadily mounted.

Additionally, in the above-described embodiment and according to claim 2, the mounting members 21, 21A are disposed in a tensioned state. The mounting members 21, 21A can be reliably fixed to the occupant seat 2 without allowing the mounting members 21, 21A to be displaced.

Additionally, in the above-described embodiment and according to claim 3, the seat bag 6 is removably mounted on the mounting members 21, 21A. Therefore, only the seat bag 6 can be easily removed.

Additionally, in the above-described embodiment and according to claim 4, the occupant seat 2 includes the seat side mounting belt 5 that serves as the mounting portion, disposed at the lower portion thereof and the connector main units 31 at right and left of the mounting members 21, 21A are fixed to the seat side mounting belt 5. The mounting members 21, 21A can therefore be mounted on the occupant seat 2 using the seat side mounting belt 5 disposed at the lower portion of the occupant seat 2.

Additionally, in the above-described embodiment, the mounting members 21, 21A are removably mounted on the seat side mounting belt 5 that serves as the mounting portion. The mounting members 21, 21A can therefore be removed when the seat bag 6 is not in use. This ensures appearance design quality of the occupant seat 2.

Additionally, in the above-described embodiment and according to claim 5, the connector includes: the connector main unit 31; the first side belt 22L or the second side belt 22R as the first side connecting belt connected to the first side in the length direction of the connector main unit 31; and the seat side mounting belt 5 as the second side connecting belt removably connected to the second side in the length direction of the connector main unit 31, the seat side mounting belt 5 including the loop portion 5W at the distal end thereof. The connector main unit 31 includes the second side insertion hole 32 formed on the second side in the length direction thereof, through which the distal end of the seat side mounting belt 5 can be passed. The connector main unit 31 includes the first side mounting hole 33 formed on the first side in the length direction of the second side insertion hole 32. The connector main unit 31 includes the laterally extending lock rod 34 disposed at a central side in the length direction of the first side mounting hole 33. The lock rod 34 has the free lateral end with the gap 35 provided between the lateral distal end and the first side mounting hole 33. The loop portion 5W can be inserted into the gap 35 so as to be locked relative to the lock rod 34. This allows the second side connecting belt to be easily connected to the connector main unit 31. Load applied to the lock rod 34 can also be reduced because of the loop portion 5W that is passed through the second side insertion hole 32 and then locked relative to the lock rod 34.

Additionally, in the above-described embodiment and according to claim 6, the connector is used in the seat bag mounting structure for
mounting the seat bag 6 on the occupant seat 2 of a saddle riding type vehicle and the mounting belt 5 as the second side connecting belt is disposed on the occupant seat 2. The mounting belt 5 disposed on the occupant seat 2 is connected to the connector main unit 31, to thereby allow the connector main unit 31 to be used for mounting the seat bag 6.

Nonlimiting effects of the embodiment include the following. Specifically, the connector main unit 31 offers, because of the frame portion 40 included therein, good strength and allows belt tension to be set at a high level. In addition, the loop portion 5W of the mounting belt 5 being passed through the second side insertion hole 32 restricts the lateral position of the mounting belt 5. This eliminates the possibility that the mounting belt will come loose during use. The first side belt 22L or the second side belt 22R as the first side connecting belt can be adjusted for length using the length adjusting device 24, so that the mounting belt 5 can be easily removed from the lock rod 34 by loosening the first side belt 22L or the second side belt 22R. Further, the length adjusting device 24 allows the length of the length adjusting belt 22 to be adjusted easily. Additionally, the first side belt 22L or the second side belt 22R and the end belt 23 are connected to the connector main unit 31 and the mounting belt 5 is removably connected to the connector main unit 31. A single connector main unit 31, to which three belts are connected, can be used for mounting the seat bag 6. Moreover, the mounting members 21, 21A and the seat bag 6 are removably arranged by the connecting means including the lock portion 12 and the lock receiving portion 12A disposed between the end belt 23 and the bag side mounting belts 11, 11A. The seat bag 6 can therefore be easily removed by disconnecting the lock portion 12 from the lock receiving portion 12A. In addition, the bag side mounting belts 11, 11A have different lock portions 12 and lock receiving portions 12A between the front and rear. This defines a longitudinal orientation of the seat bag 6. Other aspects of a bag.

Figs. 17 to 20 shows another aspect and a
detailed description thereof is given below, with the same reference numerals being used for parts the same as in the above embodiment 1 and their detailed description thereof omitted. In this aspect, a bag 6A
includes, as shown in Fig. 17, a bottom surface 7, lateral surfaces 8 surrounding all four sides, and an upper surface 9. A portion at one lateral side is formed openable by a fastener 10 acting as an opening and closing means provided on one of right and left sides of the lateral surfaces 8. A handgrip 61 is provided on the upper surface 9. These bottom surface 7, lateral surfaces 8 and upper surface are made up of a flexible sheet or the like. In addition, the bag 6A above-mentioned is not limited to a seat bag.

A bag side connecting belt 62 serving as a twofold second side connecting belt 62 is sewed, by a sewing portion 63, on a front and rear side of the lateral sides 8. The portion thus doubled over in the bag side connecting belt 62 forms a loop portion 62W, which is in an upward direction.

As is the case with the mounting belt 5 shown in Fig. 3, a distal end of the bag side connecting belt 62 is allowed to pass from the first surface (a lower surface) of the upper and lower surfaces of the connector main unit 31 through the second side insertion hole 32. Then, the distal end of the loop portion 62W that has passed through the insertion hole 32 is allowed to wind around the lock rod 34 to thereby lock the loop portion 62W relative to the lock rod 34 with the loop portion 62W being put on the lock rod 34, thereby enabling the bag side connecting belt 62 to be connected to the connector main unit 31.

Further, according to this aspect, as shown in Fig. 19, a first
side of the connector main unit 31 is integrated with the male lock portion 12 that serves as a second side lock portion. A female lock receiving portion 12A that serves as a first lock portion is removably locked relative to the lock portion 12, while a belt (not shown) or the like is connected to the male lock portion 12. In addition, in Fig. 19, the female lock receiving portion 12A and the belt connected thereto act as the first side connecting component.

Further, as shown in Fig. 20, a first side of the connector main unit 31 is integrated with the female lock portion 12A that serves as a first side lock portion. The male lock portion 12 that serves as a second lock portion is removably locked relative to the lock portion 12A, while a belt (not shown) or the like is connected to the female lock portion 12A. In addition, in Fig. 20, the female lock portion 12A and the belt connected thereto act as a first side connecting component.

As described above, in the present aspect, the connector includes the connector main unit 31 for connecting the lock portion 12 or the lock receiving portion 12A serving as the first side connecting component to the first side of the connector main unit (31) in a length direction thereof; and the bag side connecting belt 62 serving as the second side connecting belt removably connected to the second side of the connector main unit 31 in the length direction thereof, the bag side connecting belt 62 including the loop portion 62W at a distal end thereof, and provided in the seat bag 6A,
wherein the connector main unit 31 includes:
the second side insertion hole 32 formed on the second side in the length direction thereof for allowing the distal end of the bag side connecting belt 62 to be passed therethrough;
the first side mounting hole 33 formed on the first side of the second side insertion hole 32 in the length direction thereof;
the laterally-extending lock rod 34 disposed at the central side of the first side mounting hole 33 in the length direction thereof, the lock rod 34 having a free lateral end; and
the gap 35 provided between the lateral end and the first side mounting hole 33, for allowing the loop portion 62W to be put into the gap 35 so as to be locked relative to the lock rod 34.

Accordingly, the bag side connecting belt 62 can be simply connected to the connector main unit 31, and the load applied to the lock rod 34 can be reduced by locking the loop portion 62W, inserted into the second side insertion hole 32, relative to the lock rod 34. Further, the connector main unit 31 is not fixed to the bag 6A and therefore the buckle can be replaced to meet user friendliness, thus allowing the connector main unit 31 to become free from such disengaging or loosening as was conventionally done. Furthermore, since the bag side connecting belt 62 is looped to be fitted on the bag 6A without sewing the connector main unit 31 thereon, the bag side connecting belt 62 can be easily attached to the bag 6A.

Moreover, as described above, in the present aspect, the first side of the connector main unit 31 is integrated with the lock portion 12 serving as the second lock portion and removably locked relative to the lock receiving portion 12A serving as the first lock portion; or otherwise, the first side of the connector main unit 31 is integrated with the lock portion 12A serving as the second lock portion and removably locked relative to the lock portion 12 serving as the first lock portion, and then, locking the first side lock portion relative to the second lock portion connected to the bag 6A enables the lock receiving portion 12A or the lock portion 12 serving as the first lock portion to be connected to the bag 6A.

As the practical effect of this aspect, due to the first side
connecting component being the lock portion 12 or the lock receiving portion 12A, and the connector main unit 31 being integrated with the lock receiving portion 12A or the lock portion 12, it is possible to removably connect the lock portion 12 or the lock receiving portion 12A to the lock receiving portion 12A or the lock portion 12 which is integrated with the connector main unit 31.

The present invention is not limited to the above-described embodiment, but also encompasses various changes falling within the scope of the claims. For example, the mounting member is not limited only to the belt and any appropriate shape may be selected. For example, a sheet-like member may be selected. The above-described embodiment incorporates a seat that can be removed; however, the present invention may also be applied to a vehicle including a seat rotatably disposed on the vehicle body. Further, the connector may be used to connect various types of belts, in addition to the seat. The material of the belt is also selectable as appropriately. In addition, the length adjusting belt of the mounting member may be directly mounted at right and left on the seat.

### [Description of Reference Symbols]

1: Vehicle body
2: Occupant seat
3: Rider seat (seat front portion)
4: Passenger seat (seat rear portion)
5: Mounting belt (mounting portion, second side connecting belt)
5W: Loop portion
6: Seat bag
21, 21A: Mounting member
22: Length adjusting belt (mounting member main unit)
22L: First side belt (first side connecting belt)
22R: Second side belt (first side connecting belt)
24: Length adjusting device
31: Connector main unit
32: Second side insertion hole
33: First side mounting hole
34: Lock rod
35: Gap
51: Connector
62: Bag side connecting belt (Second side connecting belt)
62W: Loop portion

## Claims

1. A seat bag mounting structure for mounting a seat bag (6) on an occupant seat (2) of a saddle riding type vehicle, comprising:
a mounting member (21, 21A) disposed in a lateral direction on the occupant seat (2), the mounting member (21, 21A) being attached, at right and left ends thereof, to the occupant seat (2) such that the seat bag (6) is mounted on the mounting member (21, 21A), wherein
the mounting member (21, 21A) comprises:
a connector main unit (31);
a first side connecting belt (22L, 22R) connected to a first side of the connector main unit (31) in the length direction thereof, and
a second side connecting belt (5) removably connected to a second side of the connector main unit (31) in the length direction thereof, the second side connecting belt including a loop portion (5W) at a distal end thereof,
the connector main unit (31) includes:
a second side insertion hole (32) formed on the second side in the length direction thereof for allowing the distal end of the second side connecting belt (5) to be passed therethrough;
a first side mounting hole (33) formed on a first side of the second side insertion hole (32) in the length direction thereof,
a laterally-extending lock rod (34) disposed at a central side of the first side mounting hole (33) in the length direction thereof, the lock rod (34) having a free lateral end; and
a gap (35) provided between the free lateral end and the first side mounting hole (33), for allowing the loop portion (5W) to be put into the gap (35) so as to be locked relative to the lock rod (34), **characterized by**
a pad (41), which is disposed between the connector main unit (31) and an outer surface of a passenger seat (4) in the mounted state, is placed along an inner surface of the connector main unit (31) and is formed to be greater than the connector main unit (31) and has a first end side (41T) tapered to have a decreasing width toward an end portion that is formed to be substantially identical in width to the first side connecting belt (22L, 22R);
wherein the pad (41) is overlapped with an inner surface of the first side connecting belt (22L, 22R) and an end portion of the pad (41) is fixed to the first side connecting belt (22L, 22R) by the sewing portion (42).

2. The seat bag mounting structure according to claim 1, **characterized in that** the mounting member (21, 21A) is disposed in a tensioned state.

3. The seat bag mounting structure according to claim 1, **characterized in that** the seat bag (6) is removably mounted on the mounting member (21, 21A).

4. The seat bag mounting structure according to claim 1, **characterized in that** the seat (2) includes the second side connecting belt (5) in a lower portion of the seat (2).

5. A connector for mounting a seat bag (6) on an occupant seat (2) of a saddle riding type vehicle comprising:
a first side connecting belt (22L, 22R);
a connector main unit (31) for connecting the first side connecting belt (22L, 22R) to a first side of the connector main unit (31) in a length direction thereof; and
a second side connecting belt (5) removably connected to a second side of the connector main unit (31) in the length direction thereof, the second side connecting belt (5) including a loop portion (5W) at a distal end thereof, wherein
the connector main unit (31) includes:
a second side insertion hole (32) formed on the second side in the length direction thereof for allowing the distal end of the second side connecting belt (5) to be passed therethrough;
a first side mounting hole (33) formed on a first side of the second side insertion hole (32) in the length direction thereof;
a laterally-extending second side drawn rod (36) disposed at the second side in the length direction thereof;
an intermediate drawn rod (37) disposed between the second side insertion hole (32) and the first side mounting hole (33);
a laterally-extending lock rod (34) disposed at a central side of the first side mounting hole (33) in the length direction thereof, the lock rod (34) having a free lateral end; and
a gap (35) provided between the free lateral end and the first side mounting hole (33), for allowing the loop portion (5W) to be put into the gap (35) so as to be locked relative to the lock rod (34), and
wherein the second side connecting belt (5) is passed through the second side insertion hole (32) from a vertically first side of the connector main unit (31), and is abutted on both the second side drawn rod (36) and the intermediate drawn rod (37), and
the loop portion (5W) is allowed to be hooked, trailing over the lock rod (34) by way of the gap (35) so that the loop portion (5W) is locked relative to the lock rod (34) with the lock rod (34) inserted in the loop portion (5W), **characterized by**
a pad (41), which is disposed between the connector main unit (31) and an outer surface of a passenger seat (4) in the mounted state, is placed along an inner surface of the connector main unit (31) and is formed to be greater than the connector main unit (31) and has a first end side (41T) tapered to have a decreasing width toward an end portion that is formed to be substantially identical in width to the first side connecting belt (22L, 22R),
wherein the pad (41) is overlapped with an inner surface of the first side connecting belt (22L, 22R) and an end portion of the pad (41) is fixed to the first side connecting belt (22L, 22R) by the sewing portion (42).

6. The connector according to claim 5, **characterized in that**:
the connector is used in the seat bag mounting structure for mounting the seat bag (6) on the occupant seat (2) of a saddle riding type vehicle;
the second side connecting belt (5) is disposed on the occupant seat (2).

7. The connector according to claim 6, **characterized in that** the connector main unit (31) is integrated, at the first side, with a second lock portion (12) removably locked relative to a first lock portion (12).

## Patentansprüche

1. Sitztaschen-Montagestruktur zum Montieren einer Sitztasche (6) auf einem Sitz (2) eines Aufsitzsattel-Fahrzeugs, wobei sie aufweist:
ein Montageelement (21, 21A), das in Querrichtung auf dem Sitz (2) angeordnet ist, wobei das Montageelement (21, 21A) an seinen rechten und linken Enden an dem Sitz (2) derart angebracht ist, dass die Sitztasche (6) an dem Montageelement (21, 21A) montiert wird, wobei
das Montageelement (21, 21A) aufweist:
eine Verbinderhaupteinheit (31);
einen ersten Seitenverbindungsgurt (22L, 22R), der mit einer ersten Seite der Verbinderhaupteinheit (31) in Längsrichtung davon verbunden ist, und
einen zweiten Seitenverbindungsgurt (5), der mit einer zweiten Seite der Verbinderhaupteinheit (31) in der Längsrichtung davon lösbar verbunden ist, wobei der zweite Seitenverbindungsgurt an seinem distalen Ende einen Schleifenabschnitt (5W) enthält,
wobei die Verbinderhaupteinheit (31) enthält:
ein zweites Seiteneinführloch (32), das an der zweiten Seite in der Längsrichtung davon ausgebildet ist, um zu erlauben, dass das distale Ende des zweiten Seitenverbindungsgurts (5) dort hindurchtritt;
ein erstes Seitenmontageloch (33), das an einer ersten Seite des zweiten Seiteneinführlochs (32) in der Längsrichtung davon ausgebildet ist,
einen sich seitlich erstreckenden Arretierstab (34), der an einer mittleren Seite des ersten Seitenmontagelochs (33) in der Längsrichtung davon angeordnet ist, wobei der Arretierstab (34) ein freies seitliches Ende aufweist; und
eine Lücke (35), die zwischen dem freien seitlichen Ende und dem ersten Seitenmontageloch (33) vorgesehen ist, um das Einlegen des Schleifenabschnitts (5W) in die Lücke (35) zu erlauben, so dass er relativ zum Arretierstab (34) montiert wird, **gekennzeichnet durch**
ein Polster (41), das im montierten Zustand zwischen der Verbinderhaupteinheit (31) und einer Außenoberfläche eines Soziussitzes (4) angeordnet ist, entlang einer Innenoberfläche der Verbinderhaupteinheit (31) angeordnet ist und größer ausgebildet ist als die Verbinderhaupteinheit (31) und eine erste Endseite (41T) aufweist, die mit verringerter Breite zu einem Endabschnitt hin verjüngt ist, der mit angenähert der gleichen Breite wie der erste Seitenverbindungsgurt (22L, 22R) ausgebildet ist;
wobei das Polster (41) mit einer Innenoberfläche des ersten Seitenverbindungsgurts (22L, 22R) überlappt und ein Endabschnitt des Polsters (41) an dem ersten Seitenverbindungsgurt (22L, 22R) **durch** einen Nahtabschnitt (42) befestigt ist.

2. Die Sitztaschen-Montagestruktur nach Anspruch 1, **dadurch gekennzeichnet, dass** das Montageelement (21, 21A) im gespannten Zustand angeordnet ist.

3. Die Sitztaschen-Montagestruktur nach Anspruch 1, **dadurch gekennzeichnet, dass** die Sitztasche (6) an dem Montageelement (21, 21A) entfernbar angebracht ist.

4. Die Sitztaschen-Montagestruktur nach Anspruch 1, **dadurch gekennzeichnet, dass** der Sitz (2) den zweiten Seitenverbindungsgurt (5) in einem unteren Abschnitt des Sitzes (2) enthält.

5. Verbinder zum Montieren einer Sitztasche (6) auf einem Sitz (2) eines Aufsitzsattel-Fahrzeugs, welcher aufweist:
einen ersten Seitenverbindungsgurt (22L, 22R);
eine Verbinderhaupteinheit (31) zum Verbinden des ersten Seitenverbindungsgurts (22L, 22R) mit einer ersten Seite der Verbinderhaupteinheit (31) in Längsrichtung davon; und
einen zweiten Seitenverbindungsgurt (5), der mit einer zweiten Seite der Verbinderhaupteinheit (31) in der Längsrichtung davon lösbar verbunden ist, wobei der zweite Seitenverbindungsgurt (5) an seinem distalen Ende einen Schleifenabschnitt (5W) enthält, wobei
die Verbinderhaupteinheit (31) enthält:
ein zweites Seiteneinführloch (32), das an der zweiten Seite in der Längsrichtung davon ausgebildet ist, um zu erlauben, dass das distale Ende des zweiten Seitenverbindungsgurts (5) dort hindurchtritt;
ein erstes Seitenmontageloch (33), das an einer ersten Seite des zweiten Seiteneinführlochs (32) in der Längsrichtung davon ausgebildet ist;
einen sich seitlich erstreckenden zweiten Seitenzugstab (36), der an der zweiten Seite in der Längsrichtung davon angeordnet ist;
einen Zwischen-Zugstab (37), der zwischen dem zweiten Seiteneinführloch (32) und dem ersten Seitenmontageloch (33) angeordnet ist;
einen sich seitlich erstreckenden Arretierstab (34), der an einer mittleren Seite des ersten Seitenmontagelochs (33) in der Längsrichtung davon angeordnet ist, wobei der Arretierstab (34) ein freies seitliches Ende aufweist; und
eine Lücke (35), die zwischen dem freien seitlichen Ende und dem ersten Seitenmontageloch (33) vorgesehen ist, um das Einsetzen des Schleifenabschnitts (5W) in die Lücke (35) zu erlauben, so dass er relativ zum Arretierstab (34) arretiert wird; und
wobei der zweite Seitenverbindungsgurt (5) von einer vertikal ersten Seite der Verbnderhaupteinheit (31) durch das zweiten Seiteneinführloch (32) hindurchtritt, und sowohl am zweiten Seitezugstab (36) als auch am Zwischen-Zugstab (37) abgestützt ist, und
der Schleifenabschnitt (5W) über den Arretierstab (34) durch die Lücke (35) verlaufend hakbar ist, so dass der Schleifenabschnitt (5W) relativ zum Arretierstab (34) mit dem in den Schleifenabschnitt (5W) eingeführten Arretierstab (34) arretiert wird, **gekennzeichnet durch**
ein Polster (41), das im montierten Zustand zwischen der Verbinderhaupteinheit (31) und einer Außenoberfläche eines Soziussitzes (4) angeordnet ist, entlang einer Innenoberfläche der Verbinderhaupteinheit (31) angeordnet ist und größer ausgebildet ist als die Verbinderhaupteinheit (31) und eine erste Endseite (41T) aufweist, die mit verringerter Breite zu einem Endabschnitt hin verjüngt ist, der mit angenähert der gleichen Breite wie der erste Seitenverbindungsgurt (22L, 22R) ausgebildet ist;
wobei das Polster (41) mit einer Innenoberfläche des ersten Seitenverbindungsgurts (22L, 22R) überlappt und ein Endabschnitt des Polsters (41) an dem ersten Seitenverbindungsgurt (22L, 22R) **durch** einen Nahtabschnitt (42) befestigt ist.

6. Der Verbinder von Anspruch 5, **dadurch gekennzeichnet, dass**:
der Verbinder in der Sitztaschen-Montagestruktur zum Montieren der Sitztasche (6) auf dem Sitz (2) des Aufsitzsattel-Fahrzeugs dient;
der zweite Seitenverbindungsgurt (5) auf dem Sitz (2) angeordnet ist.

7. Der Verbinder von Anspruch 6, **dadurch gekennzeichnet, dass** die Verbinderhaupteinheit (31) an der ersten Seite mit einem zweiten Arretierabschnitt (12) integriert ist, der relativ zum ersten Arretierabschnitt (12) lösbar arretiert ist.

## Revendications

1. Structure de montage de housse de siège pour monter une housse de siège (6) sur un siège d'occupant (2) d'un véhicule de type à selle, comprenant :
un élément de montage (21, 21A) disposé dans une direction latérale sur le siège d'occupant (2), l'élément de montage (21, 21A) étant fixé, au niveau de ses extrémités droite et gauche, sur le siège d'occupant (2), de sorte que la housse de siège (6) est montée sur l'élément de montage (21, 21A), dans laquelle
l'élément de montage (21, 21A) comprend :
une unité principale de connexion (31) ;
une première courroie de raccordement latérale (22L, 22R) raccordée à un premier côté de l'unité principale de connexion (31) dans sa direction longitudinale, et
une seconde courroie de raccordement latérale (5) raccordée de manière amovible à un second côté de l'unité principale de connexion (31) dans sa direction longitudinale, la seconde courroie de raccordement latérale comprenant une partie de boucle (5W) au niveau de son extrémité distale,
l'unité principale de connexion (31) comprend :
un second trou d'insertion latéral (32) formé sur le second côté dans sa direction longitudinale pour permettre à l'extrémité distale de la seconde courroie de raccordement latérale (5) de passer à travers ce dernier ;
un premier trou de montage latéral (33) formé sur un premier côté du second trou d'insertion latéral (32) dans sa direction longitudinale,
une tige de verrouillage s'étendant latéralement (34) disposée au niveau d'un côté central du premier trou de montage latéral (33) dans sa direction longitudinale, la tige de verrouillage (34) ayant une première extrémité latérale libre ; et
un espace (35) prévu entre l'extrémité latérale libre et le premier trou de montage latéral (33), pour permettre de placer la partie de boucle (5W) dans l'espace (35) afin d'être verrouillée par rapport à la tige de verrouillage (34), **caractérisée par**
un coussinet (41) qui est disposé entre l'unité principale de connexion (31) et une surface externe d'un siège de passager (4) à l'état monté, est placé le long d'une surface interne de l'unité principale de connexion (31) et est formé pour être supérieur à l'unité principale de connexion (31) et a un premier côté d'extrémité (41T) progressivement rétréci pour avoir une largeur décroissante vers une partie d'extrémité qui est formée pour être sensiblement identique en largeur à la première courroie de raccordement latérale (22L, 22R) ;
dans laquelle le coussinet (41) est recouvert avec une surface interne de la première courroie de raccordement latérale (22L, 22R) et une partie d'extrémité du coussinet (41) est fixée à la première courroie de raccordement latérale (22L, 22R) par la partie de couture (42).

2. Structure de montage de housse de siège selon la revendication 1, **caractérisée en ce que** l'élément de montage (21, 21A) est disposé dans un état tendu.

3. Structure de montage de housse de siège selon la revendication 1, **caractérisée en ce que** la housse de siège (6) est montée de manière amovible sur l'élément de montage (21, 21A).

4. Structure de montage de housse de siège selon la revendication 1, **caractérisée en ce que** le siège (2) comprend la seconde courroie de raccordement latérale (5) dans une partie inférieure du siège (2).

5. Connexion pour monter une housse de siège (6) sur un siège d'occupant (2) d'un véhicule de type à selle comprenant :
une première courroie de raccordement latérale (22L, 22R) ;
une unité principale de connexion (31) pour raccorder la première courroie de raccordement latérale (22L, 22R) à un premier côté de l'unité principale de connexion (31) dans sa direction longitudinale ; et
une seconde courroie de raccordement latérale (5) raccordée de manière amovible à un second côté de l'unité principale de connexion (31) dans sa direction longitudinale, la seconde courroie de raccordement latérale (5) comprenant une partie de boucle (5W) au niveau de son extrémité distale, dans lequel
l'unité principale de connexion (31) comprend :
un second trou d'insertion latéral (32) formé sur le second côté dans sa direction longitudinale pour permettre à l'extrémité distale de la seconde courroie de raccordement latérale (5) de passer à travers ce dernier ;
un premier trou de montage latéral (33) formé sur un premier côté du second trou d'insertion latéral (32) dans sa direction longitudinale ;
une seconde tige étirée s'étendant latéralement (36) disposée au niveau du second côté dans sa direction longitudinale ;
une tige étirée intermédiaire (37) disposée entre le second trou d'insertion latéral (32) et le premier trou de montage latéral (33) ;
une tige de verrouillage s'étendant latéralement (34) disposée au niveau d'un côté central du premier trou de montage latéral (33) dans sa direction longitudinale, la tige de verrouillage (34) ayant une extrémité latérale libre ; et
un espace (35) prévu entre l'extrémité latérale libre et le premier trou de montage latéral (33) pour permettre de placer la partie de boucle (5W) dans l'espace (35) afin d'être verrouillée par rapport à la tige de verrouillage (34), et
dans lequel la seconde courroie de raccordement latérale (5) passe à travers le second trou d'insertion latéral (32) à partir d'un premier côté vertical de l'unité principale de connexion (31) et vient en butée à la fois contre la seconde tige étirée latérale (36) et la tige étirée intermédiaire (37), et
la partie de boucle (5W) est autorisée à être accrochée, suivant la tige de verrouillage (34) au moyen de l'espace (35), de sorte que la partie de boucle (5W) est verrouillée par rapport à la tige de verrouillage (34), avec la tige de verrouillage (34) insérée dans la partie de boucle (5W), **caractérisé par**
un coussinet (41) qui est disposé entre l'unité principale de connexion (31) et une surface externe d'un siège de passager (4) à l'état monté, est placé le long d'une surface interne de l'unité principale de connexion (31) et est formé pour être supérieur à l'unité principale de connexion (31) et a un premier côté d'extrémité (41T) progressivement rétréci pour avoir une largeur décroissante vers une partie d'extrémité qui est formée pour être sensiblement identique en largeur à la première courroie de raccordement latérale (22L, 22R),
dans lequel le coussinet (41) est recouvert avec une surface interne de la première courroie de raccordement latérale (22L, 22R) et une partie d'extrémité du coussinet (41) est fixée sur la première courroie de raccordement latérale (22L, 22R) par la partie de couture (42).

6. Connexion selon la revendication 5, **caractérisé en ce que** :
le connexion est utilisé dans la structure de montage de housse de siège pour monter la housse de siège (6) sur le siège d'occupant (2) d'un véhicule de type à selle ;
la seconde courroie de raccordement latérale (5) est disposée sur le siège d'occupant (2).

7. Connexion selon la revendication 6, **caractérisé en ce que** l'unité principale de connexion (31) est intégrée, au niveau du premier côté, avec une seconde partie de verrouillage (12) verrouillée de manière amovible par rapport à la première partie de verrouillage (12).
